Europäisches Patentamt

European Patent Office

Office européen des brevets

(11) Numéro de publication: **0 388 280**
**A1**

## DEMANDE DE BREVET EUROPEEN

(21) Numéro de dépôt: **90400659.0**

(22) Date de dépôt: **13.03.90**

(51) Int. Cl.5: **G06F 3/023**

(30) Priorité: **17.03.89 FR 8903532**

(43) Date de publication de la demande:
**19.09.90 Bulletin 90/38**

(84) Etats contractants désignés:
**DE ES GB IT SE**

(71) Demandeur: **THOMSON-CSF**
**51, Esplanade du Général de Gaulle**
**F-92800 Puteaux(FR)**

(72) Inventeur: **Banaszak, Jean-Marie,**
**Thomson-CSF**
**SCPI, Cédex 67**
**F-92045 Paris la Défense(FR)**

(74) Mandataire: **Lincot, Georges et al**
**THOMSON-CSF SCPI**
**F-92045 PARIS LA DEFENSE CEDEX 67(FR)**

(54) **Procédé et dispositif pour la transmission et l'enregistrement de messages codés numériquement.**

(57) Le procédé consiste, à sélectionner (5), parmi des symboles ou idéogrammes représentatifs d'actions ou d'objets d'un théâtre opérationnel ceux qui sont propres à renseigner de l'état de situations déterminées observables dans le théâtre opérationnel, à composer les messages suivant différents champs contenant chacun un symbole pour juxtaposer les symboles sélectionnés dans un ordre convenable pour décrire chaque type de situation observée, à coder et à transmettre (TX) quasi-simultanément chaque message composé, chaque message pouvant être transmis à tout moment quelque soit l'état de renseignement des différents champs constitutifs du message et quelque soit leur ordre de renseignement.

Application : missions de renseignement.

FIG.2

## Procédé et dispositif pour la transmission et l'enregistrement de messages codés numériquement

La présente invention concerne un procédé et un dispositif pour la transmission et l'enregistrement de messages codés numériquement. Elle s'applique notamment à la transmission de messages opérationnels très brefs qui permettent à des personnes, occupant une position géographique éloignée d'un lieu où se déroulent des événements, d'avoir la connaissance immédiate de la nature et éventuellement de la gravité de ceux-ci. Les messages opérationnels sont habituellement transmis sous la forme de données numériques au moyen de supports de transmission de l'information très divers tels que par exemple, des émetteurs-récepteurs radio portables ou portatifs ou encore des lignes téléphoniques, par l'intermédiaire de terminaux alpha-numériques.

Cependant, ces supports perdent de leur efficacité lorsque la transmission s'effectue dans des conditions inconfortables pour l'opérateur ou encore lorsqu'à un instant donné plusieurs événements ont lieu quasi-simultanément. Dans ces cas en effet, le temps nécessaire pour rendre compte d'une situation peut devenir exagérément important, soit parce que l'opérateur réagit trop lentement pour formuler le ou les événements auxquels il assiste ou qu'il est contraint par des sollicitations physiques d'interrompre momentanément sa formulation, soit encore à cause de la complexité de mise en oeuvre des supports de transmission utilisés.

Le but de l'invention est de pallier les inconvénients précités.

A cet effet, l'invention a pour objet, un procédé pour la transmission numérique et l'enregistrement de messages opérationnels codés numériquement caractérisé en ce qu'il consiste, à sélectionner, parmi des symboles ou idéogrammes représentatifs d'actions ou d'objets d'un théâtre opérationnel ceux qui sont propres à renseigner de l'état de situations déterminées observées dans le théâtre opérationnel, à composer les différents champs des message en juxtaposant les symboles sélectionnés dans l'ordre convenable pour décrire chaque type de situation observée, à coder et transmettre quasi-simultanément chaque message composé, chaque message pouvant être transmis à tout moment quel que soit l'état de renseignement des différents champs constitutifs du message et quelque soit leur ordre de renseignement.

L'invention a également pour objet des dispositifs pour la mise en oeuvre du procédé précité.

Outre le fait que l'invention permet une saisie très rapide de situations opérationnelles, elle présente aussi l'avantage d'offrir un langage de communication universel très simple à acquérir.

D'autres caractéristiques et avantages de l'invention apparaîtront ci-après à l'aide de la description qui suit faite en regard des dessins annexés qui représentent :

- la figure 1 l'organisation d'un système de transmission d'informations décrites au moyens d'idéogrammes selon l'invention ;
- la figure 2 l'organisation d'un clavier de terminal utilisable pour la composition de messages selon l'invention ;
- les figures 3a et 3b la signification des symboles gravés sur le clavier d'un terminal ;
- la figure 4 un exemple de composition de messages ;
- la figure 5 un exemple de restitution d'une scène observée sur l'écran de la console graphique du dispositif de contrôle représenté à la figure 1 ;
- la figure 6 un mode de réalisation d'un terminal composant le système représenté à la figure 1 ;
- la figure 7 un mode de réalisation de la station de contrôle composant le système représenté à la figure 1.

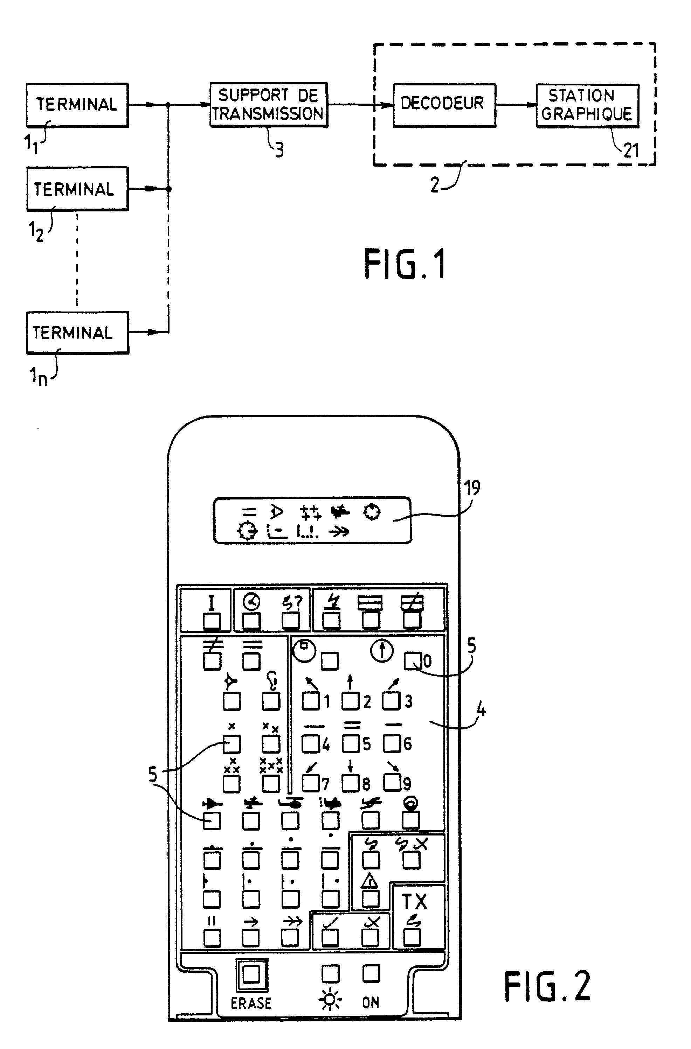

Le système selon l'invention qui est représenté à la figure 1 comporte plusieurs terminaux $1_1$ à $1_N$ transmetteurs d'informations, couplés à un centre de contrôle 2 représenté à l'intérieur d'une ligne fermée en pointillés. Un support de transmission 3 formé par tout dispositif de transmission connu de type radio ou téléphonique assure le transport des informations émises par chaque terminal $1_1$ à $1_N$. Chaque terminal $1_1$ à $1_N$ est confié dans l'exploitation du système à un opérateur ou guetteur à vue, chargé d'observer la scène du théâtre opérationnel dans lequel il se trouve situé et de renseigner le centre de contrôle 2 des événements qui s'y déroulent. Selon l'invention, au lieu d'utiliser, un clavier alpha-numérique pour transmettre en clair ses messages, l'observateur utilise une structure de clavier symbolique du type de celle qui est représentée à la figure 2 où à la différence du clavier alpha-numérique, chaque touche 5 est associée non pas à une lettre d'un alphabet ou à un nombre d'un système de numération mais à un symbole ou idéogramme représentatif d'un objet ou d'une action choisi parmi une famille d'objets ou d'actions que l'opérateur est susceptible d'identifier dans la scène qu'il observe, ou d'actions qu'il est lui même en train d'effectuer.

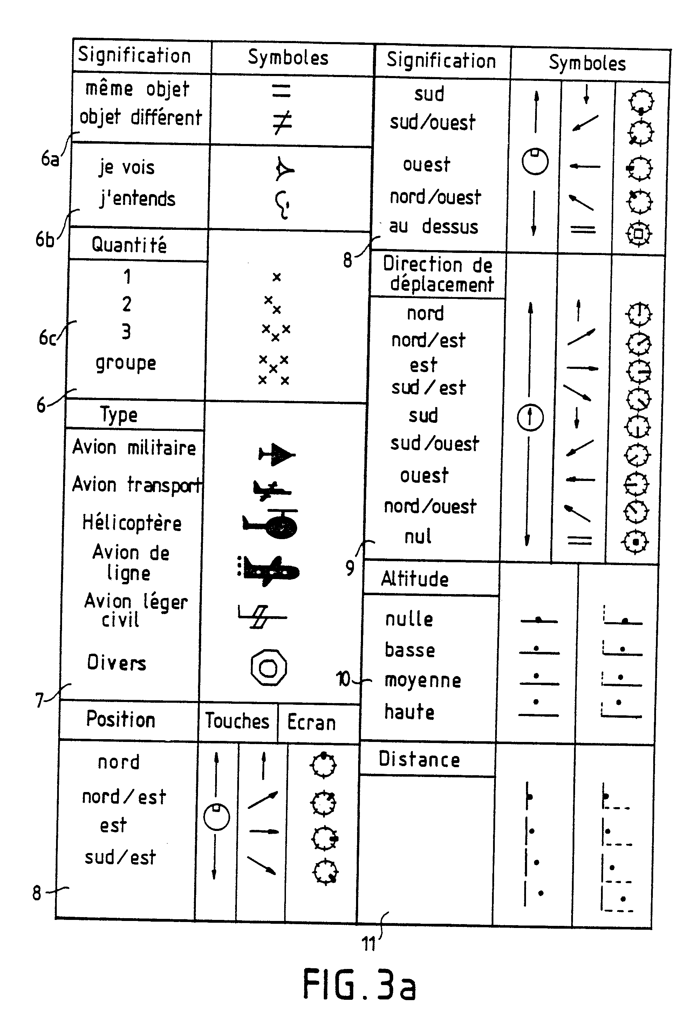

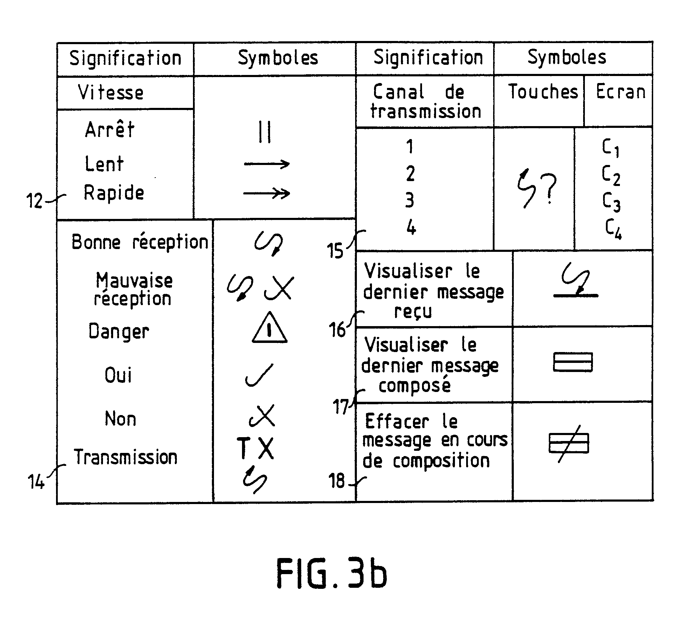

Dans l'exemple de la figure 2 le clavier comporte des symboles qui sont adaptés plus particulièrement à la description de situations aériennes et leur signification est indiquée dans les tableaux représentés aux figures 3A et 3B.

Pour une question d'ergonomie le clavier est partagé en plusieurs zones contenant les symboles et les touches correspondantes nécessaires d'une part, à la constitution de messages opérationnels et d'autre part, à la constitution de messages de service. Une première zone représentée en 6 dans la figure 3A regroupe des touches indiquant la nature du message qui est transmis, ce message pouvant renseigner sur le fait que l'objet observé est le même que dans le message précédent ou que le message concerne un objet différent, des touches pour indiquer la nature de l'observation du type "je vois" "j'entends" et des touches pour indiquer le nombre d'avions observés : un avion, deux avions, trois avions, un groupe d'avions. Le clavier comporte également représenté dans une zone 7 de la figure 3a des touches pour indiquer le type d'avion observé. les symboles utilisés représentent sur la figure 3A soit des avions militaires ou de transport, des hélicoptères, des avions de ligne ou des avions légers civils ou encore des objets divers tels que des parachutes, ballons, ULM etc...

La zone référencée en 8 sur la figure 3A comporte les touches indiquant le lieu géographique de l'observation. Les touches correspondantes sont utilisées par deux, la première touche permet de choisir la fonction position et la deuxième touche permet d'indiquer cette position. Dans l'exemple représenté, 9 choix sont possibles : nord, nord/est, est, sud/est, sud, sud/ouest, ouest, nord/ouest, et au-dessus.

La zone représentée en 9 sur la figure 3A comporte les touches indiquant la direction prise par l'avions observé. Ces touches sont utilisées également par deux. La première touche permet de choisir la fonction direction. La deuxième touche permet d'indiquer la direction parmi les 9 choix possibles : nord, nord/est, est, sud/est, sud, sud/ouest, ouest, nord/ouest, verticale. La zone représentée en 10 sur la figure 3A comporte les touches indiquant l'altitude de l'avion parmi quatre choix possibles, nulle, basse, moyenne, haute altitude. La zone référencée en 11 sur la figure 3A comporte les touches indiquant la distance de l'avion par rapport à l'observateur parmi quatre choix possibles qui sont nulle, proche, moyenne, éloignée. La zone référencée en 12 sur la figure 3B comporte les touches indiquant la vitesse de l'avion parmi trois choix possibles et qui sont arrêt : lent et rapide. Enfin les zones 14 à 18 contiennent les touches et symboles qui sont nécessaires à la transmission de messages de service indiquant par exemple que la réception est correcte ou qu'elle est incorrecte, qu'il existe un danger, que l'on confirme l'exécution d'un ordre reçu ou que l'ordre reçu n'est pas exécuté.

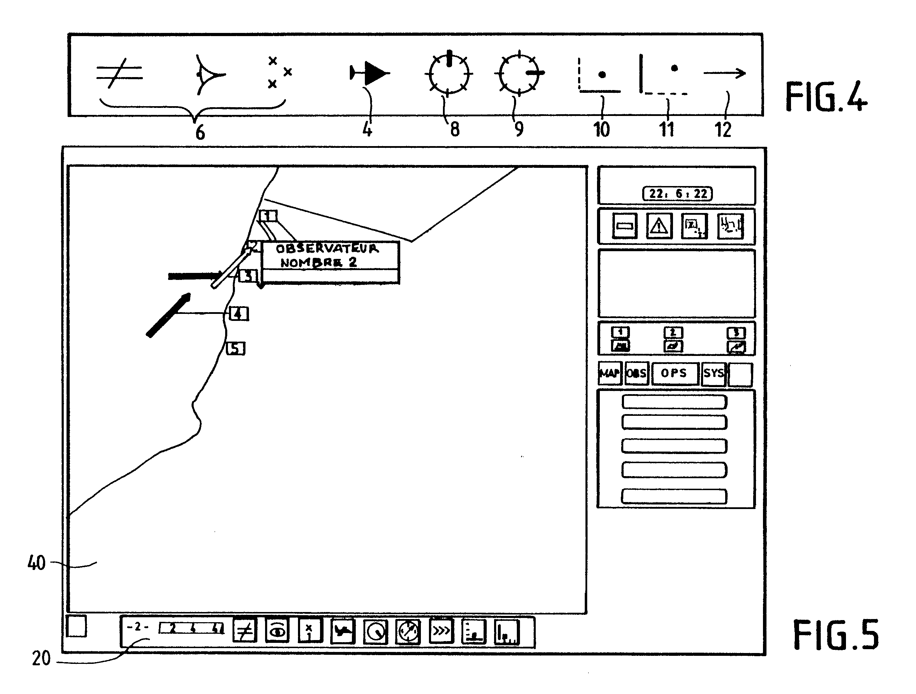

L'appui sur les touches 5 du clavier du transmetteur de la figure 2 permet de composer à volonté tout message susceptible de renseigner sur la nature, la position et la vitesse de tout avion évoluant dans la scène observée. Un exemple de composition de ces messages est représenté à la figure 4 où l'on peut lire, sur l'enchaînement des symboles utilisés que le message concerne une observation différente de l'observation précédente, que l'opérateur voit la scène devant lui que cette scène comporte trois avions militaires venant du nord et se dirigeant à l'est avec une altitude moyenne et une distance moyenne à faible vitesse.

Le message de la figure 4 est inscrit durant sa composition sur un écran 19 du terminal représenté à la figure 2. Il est reçu et enregistré de la manière représentée à la figure 5 à l'intérieur d'une fenêtre 20 d'un écran de visualisation d'une station graphique 21 équipant le centre de contrôle 2 de la figure 1.

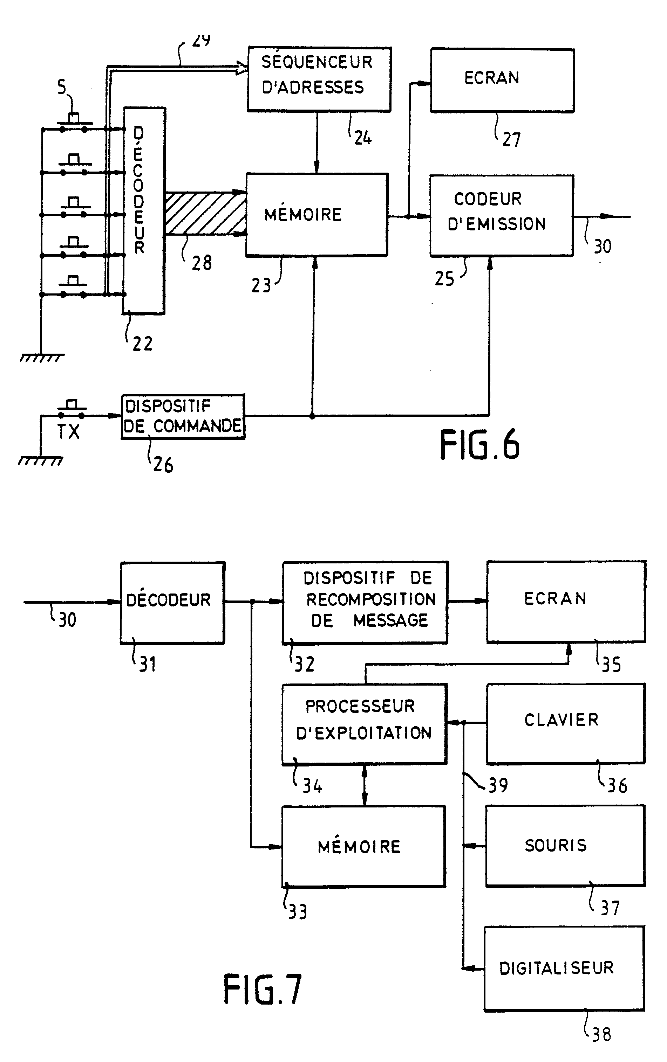

Un mode de réalisation d'un terminal 1 est représenté à la figure 6. Il comprend outre les touches 5, un décodeur 22 une mémoire vive 23, un séquenceur d'adresses 24, un codeur d'émission 25, un dispositif de commande 26 et un écran 27. Les symboles sélectionnés par les touches 5 du clavier 4 sont appliqués après codage par le décodeur 22 sur un bus de données 28 relié à la mémoire 23. Chaque appui touche déclenche sur un bus de commande 29 relié au séquenceur d'adresses 24 un cycle d'écriture des données circulant sur le bus 28 à l'intérieur de la mémoire vive 23. Il déclenche également un cycle de lecture de la mémoire 23 pour faire apparaître sur l'écran 26 des symboles mémorisés dans la mémoire 23. La mémoire 23 est également reliée au codeur d'émission 25 pour transmettre sous l'action de la touche TX du clavier de la figure 2 chaque message composé à l'intérieur de la mémoire 23 sur une liaison 30 à destination du centre de contrôle 2. Le centre de contrôle 2 qui est représenté à la figure 7 comprend un décodeur de symboles 31 un dispositif de récomposition de messages 32 formé par un microprocesseur ou tout dispositif équivalent, une mémoire vive 33, un processeur d'exploitation 34, un écran 35, un clavier 36, une souris 37 et un digitaliseur 38. les symboles transmis par un terminal 1 sont appliqués à l'entrée du décodeur 31 par la liaison 30. Ils sont appliqués d'une part, à l'entrée du dispositif de récomposition de messages 32 et d'autre part, à l'entrée de données de la mémoire 33. L'ensemble clavier 36, souris 34 et digitaliseur 38 est relié par un bus de données 39 en processeur d'exploitation 34. Le processeur d'exploitation 34 est relié d'une part à la mémoire 33 et d'autre part, à l'écran 35. Le processus 34 assure l'inscription des données transitant sur le bus de données 39 ou provenant du décodeur 31 à l'intérieur de la mémoire 33 et la visualisation de ces données sur l'écran 35. L'ensemble des éléments formés par le clavier 36 la souris 37, le digitaliseur 38 assure l'interface entre l'exploitant et le processeur d'exploitation 34. Il permet notamment à l'opérateur du centre de contrôle d'initialiser le système en introduisant, au moyen du digitaliseur 38 la carte du terrain opérationnel dans la mémoire 34 et au moyen de la souris 37 et du clavier 36 les positions des observateurs sur la carte opérationnelle en fonction de leur position géographique réelle sur le terrain, chaque observateur étant repéré par exemple par un code spécifique leur permettant d'être en communication avec le centre de contrôle.

En cours d'exploitation, les messages reçus sont comme le montre la figure 5 visualisés dans leur forme symbolique au fur et à mesure de leur arrivée à l'intérieur de la fenêtre 20. Le dispositif de recomposition 34 est convenablement programmé pour assurer l'affichage systématique d'informations prédéterminées de façon à présenter à l'opérateur du centre de contrôle une vue synthétique des déplacements des divers mobiles observés par les observations sur le terrain opérationnel. Ces déplacements sont identifiés sur la figure 5 par des vecteurs dont les directions et les distances par rapport aux observateurs sont calculées par le dispositif de recomposition de messages 32 à partir des informations de direction et d'éloignement composant les champs correspondant des messages. D'autre part, le processeur d'exploitation 31 offre également la possibilité pour l'opérateur d'effectuer des opérations ultérieures sur les messages symboliques reçus par les systèmes et notamment il permet d'effectuer les opérations de tri, de sélection, d'annulation et d'une façon générale toute opération capable de l'aider dans son exploitation opérationnelle.

**Revendications**

1. Procédé pour la transmission numérique et l'enregistrement de messages opérationnels codés numériquement caractérisé en ce qu'il consiste, à sélectionner, parmi des symboles ou idéogrammes représentatifs d'actions ou d'objets d'un théâtre opérationnel ceux qui sont propres à renseigner de l'état de situations déterminées observées dans le théâtre opérationnel, à composer les messages suivant différents champs (6,7 ... 18) contenant chacun un symbole pour juxtaposer les symboles sélectionnés dans un ordre convenable pour décrire chaque type de situation observée, à coder et transmettre (25) quasi-simultanément chaque message composé, chaque message pouvant être transmis à tout moment quel que soit l'état de renseignement des différents champs constitutifs du message et quelque soit leur ordre de renseignement.

2. procédé selon la revendication 1 caractérisé en ce que chaque message comprend au moins un premier champ (6a) pour indiquer que les objets observés sont identiques ou différents de ceux du message précédent, un deuxième champ (6b) pour indiquer que l'observateur voit ou entend l'objet se déplacer dans le théâtre opérationnel, un troisième champ pour indiquer le nombre d'objets observés, un quatrième champ (7) pour indiquer la nature de l'objet observé, un cinquième champ (8) pour indiquer la direction d'où viennent le ou le groupe d'objets observés, un sixième champ (9) pour indiquer la direction où se dirige l'objet ou le groupe d'objets observés, un septième champ (10) pour indiquer l'altitude de l'objet ou du groupe d'objets observés, un huitième champ (37) pour indiquer la distance par rapport à l'observateur et un neuvième champ pour indiquer la vitesse (12) de l'objet ou du groupe d'objets observés.

3. Procédé selon les revendications 1 et 2 caractérisé en ce que les messages transmis sont enregistrés puis recomposés pour représenter sur un organe de visualisation (21) une vue synthétique des déplacements des divers objets sur la scène du théâtre opérationnel.

4. Procédé selon la revendication 3 caractérisé en ce que les déplacements sont représentés par des vecteurs (39) dont les directions et les distances par rapport aux observateurs sont déterminées à partir des champs (8, 9) de direction et d'éloignement (11) contenus dans les messages.

5. Dispositif pour la mise en oeuvre du procédé selon l'une quelconque des revendications 1 à 4 caractérisé en ce qu'il comprend au moins un transmetteur de message (1) relié à un centre de contrôle (2) par un support de transmission (3), chaque transmetteur (1) comprenant un clavier (4) composé de touches (5) affectées chacune à au moins un symbole ou idéogramme à transmettre et couplé à un codeur d'émission (25) pour appliquer chaque symbole ou idéogramme sélectionné au clavier (4) sur le support de transmission à destination du centre de contrôle (2), le centre de contrôle comprenant un décodeur (31) de message couplé à un écran de visualisation (35) et à un processeur d'exploitation (34) pour enregistrer (20) sur l'écran chaque message transmis.

6. Dispositif selon la revendication 5 caractérisé en ce que le processeur d'exploitation (34) est relié à des dispositifs d'entrée-sortie d'informations (36, 37, 38) permettant la visualisation de la carte du théâtre opérationnel et de la situation des observateurs sur la carte.

7. Dispositif selon la revendication 6 caractérisé en ce que le centre de contrôle comprend un dispositif de recomposition de messages (32) pour permettre des représentations sur la carte et sous une forme vectorielle des déplacements des objets observés sur le terrain opérationnel.

FIG.1

FIG.2

| Signification | Symboles | Signification | Symboles | | |
|---|---|---|---|---|---|
| même objet | = | sud | | | |
| objet différent | ≠ | sud/ouest | | | |
| je vois | | ouest | | | |
| j'entends | | nord/ouest | | | |
| | | au dessus | | | |
| Quantité | | Direction de déplacement | | | |
| 1 | × | nord | | | |
| 2 | | nord/est | | | |
| 3 | | est | | | |
| groupe | | sud/est | | | |
| | | sud | | | |
| Type | | sud/ouest | | | |
| Avion militaire | | ouest | | | |
| Avion transport | | nord/ouest | | | |
| Hélicoptère | | nul | | | |
| Avion de ligne | | Altitude | | | |
| Avion léger civil | | nulle | | | |
| Divers | | basse | | | |
| | | moyenne | | | |
| Position | Touches | Ecran | haute | | |
| nord | | | Distance | | |
| nord/est | | | | | |
| est | | | | | |
| sud/est | | | | | |

FIG. 3a

| Signification | Symboles | Signification | Symboles | |
|---|---|---|---|---|
| Vitesse | | Canal de transmission | Touches | Ecran |
| Arrêt | ‖ | 1 | | $C_1$ |
| Lent | ⟶ | 2 | | $C_2$ |
| Rapide | ⟶⟶ | 3 | ᶘ? | $C_3$ |
| | | 4 | | $C_4$ |
| Bonne réception | ᶘ | Visualiser le dernier message reçu | | |
| Mauvaise réception | ᶘ ✕ | | | |
| Danger | ⚠ | Visualiser le dernier message composé | | |
| Oui | ✓ | | | |
| Non | ✕ | Effacer le message en cours de composition | | |
| Transmission | T X ᶘ | | | |

FIG. 3b

FIG.4

FIG.5

OBSERVATEUR NOMBRE 2

22.6.22

MAP OBS OPS SYS

FIG.6

FIG.7

Office européen
des brevets

**RAPPORT DE RECHERCHE EUROPEENNE**

Numero de la demande

EP 90 40 0659

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-2 115 587 (SHARP)<br>* Figures 1,4; page 1, lignes 71-100; page 2, lignes 34-34,44-56 *<br>--- | 1-3 | G 06 F 3/023 |
| A | US-A-4 696 492 (HARDIN)<br>* Figures 1,5; colonne 5, ligne 65 - colonne 6, ligne 43 *<br>--- | 1,2 | |
| A | US-A-4 546 435 (HERBERT et al.)<br>* Figures 1-3; colonne 2, ligne 61 - colonne 3, ligne 64; colonne 4, ligne 67 - colonne 5, ligne 7 *<br>----- | 1,2 | |

**DOMAINES TECHNIQUES RECHERCHES (Int. Cl.5)**

G 06 F 3
G 09 B 9

Le présent rapport a été établi pour toutes les revendications

| Lieu de la recherche | Date d'achèvement de la recherche | Examinateur |
|---|---|---|
| LA HAYE | 11-06-1990 | WEISS P. |